# EUROPEAN PATENT APPLICATION

(11) **EP 4 764 213 A1**
(43) Date of publication of application: **24.06.2026**
(21) Application number: 25159575.7
(22) Date of filing: 24.02.2025
(51) Int. Cl.: F03G 7/10, F03B 17/06

(54) **ROTARY POWER GENERATION DEVICE**

(30) Priority: 18.12.2024 CN 202411865349
(71) Applicant: Shijiazhuang Jianmu Feed Co., Ltd., Shijiazhuang, Hebei (CN)
(72) Inventor: Wei, Zijie, Shijiazhuang City, Hebei Province (CN); Zhao, Qiqi, Shijiazhuang City, Hebei Province (CN); Wei, Lulu, Shijiazhuang City, Hebei Province (CN); Wei, Xiuguang, Shijiazhuang City, Hebei Province (CN)
(74) Representative: Cabinet Chaillot

(57) **Abstract**

The invention relates to the technical field of power generation devices, in particular to a rotary power generation device, comprising a rotating platform and power generation assemblies, the rotating platform is arranged longitudinally, the power generation assemblies are arranged on the rotating platform. The rotary power generation device of this invention, through optimized design, ensures that the power generation assemblies are evenly distributed on the rotating platform, effectively utilizing every angle of the rotating platform and enhancing power generation efficiency. The invention has high flexibility and adaptability, and can be adapted according to different external power sources, effectively converting various external energy sources such as wind energy, water energy, and mechanical energy into electrical energy, thereby achieving diversified energy utilization. The power generation device of the invention cleverly integrates the forces of gravity and centrifugal force generated by rotation. The synergy of these two forces greatly enhances the rotation of the pendulum, thereby driving the rotor of the generator to achieve a continuous and stable current output. This invention can significantly improve power generation efficiency.

## Description

### Technical Field

The invention relates to the technical field of power generation devices, in particular to a rotary power generation device.

### Background

In the field of existing power generation technologies, traditional methods primarily rely on energy sources such as thermal, hydro, wind, and solar power. Each of these methods has its own advantages and disadvantages. For example, thermal power generation is highly efficient but causes significant environmental pollution; hydroelectric power generation is geographically limited; wind and solar power generation are highly affected by weather conditions. As the energy crisis and environmental pollution problems become increasingly severe, the search for new, efficient, and environmentally friendly power generation methods has become an urgent need.

Rotary power generation devices, as a novel power generation technology, are designed to convert mechanical energy into electrical energy by harnessing rotational motion to produce electricity. However, the rotary power generation devices available in prior art are often limited to single-scenario applications, struggling to adapt to a variety of different operating conditions and power generation environments, thereby constraining their widespread application.

### Summary of the invention

The object of the invention is to solve the problem of low versatility of the rotary power generation device in the prior art, and to provide a power generation device that can be applied to a variety of platforms and a variety of working environments, while fully and cleverly utilizing gravity and the centrifugal force generated by rotation to drive the power generation assemblies to generate electricity, thereby effectively improving the power generation efficiency.

In order to solve the above technical problems, the invention provides the following technical scheme:
a rotary power generation device, comprising a rotating platform and power generation assemblies, multiple power generation assemblies are provided and evenly arranged on the rotating platform;
each power generation assembly comprises a generator, a gearbox, a swing rod, and a pendulum; the pendulum is connected to an input shaft of the gearbox at a right angle through the swing rod; an output shaft of the gearbox is connected to a rotor shaft of the generator;
after the rotating platform rotates, the pendulum swings under the action of gravity and the centrifugal force generated by the rotation of the rotating platform, and drives a rotor of the generator to rotate through the swing rod and the gearbox to generate electricity.

As an improvement, the rotating platform is provided with guide rails, each pendulum is provided with a pulley that matches the corresponding guide rail.

As an improvement, each guide rail adopts an annular or arc-shaped structure.

As an improvement, each gearbox adopts a two-way transmission gearbox.

As an improvement, the rotating platform is in a ring shape, a hub shape, a sector shape or a disc shape.

As an improvement, the rotating platform is provided with a power assembly, the power assembly drives the rotating platform to rotate.

As an improvement, the power assembly is a central shaft, the central shaft is connected to the rotating platform through a support rod; the central shaft is connected to an external power device.

As an improvement, the power assembly can be fan blades; a rear of the rotating platform is fixedly connected to the power assembly.

As an improvement, the power assembly can be a water wheel; a rear of the rotating platform is fixedly connected to the power assembly.

As an improvement, the power generation device is also provided with a rectifier component; the current generated by the generator is processed by the rectifier component and then transmitted or stored.

The invention has the following advantages:
1. the rotary power generation device of this invention, through optimized design, ensures that the power generation assemblies are evenly distributed on the rotating platform, effectively utilizing every angle of the rotating platform and enhancing power generation efficiency. Additionally, it employs a two-way transmission gearbox, no matter whether the swing rod drives the input shaft to rotate forward or reverse, it can drive the rotor of the generator to rotate and generate electricity, further enhancing power generation efficiency.
2. The invention has high flexibility and adaptability, enabling it to be tailored to different external power sources. For instance, when wind power is used as the power source, the power assembly can be designed as fan blades to directly convert wind energy into mechanical energy, thereby driving the rotation of the rotating platform. Similarly, when hydropower is used, the power assembly can be designed as a water wheel, utilizing the impact force of water flow to drive the rotating platform. This design allows the invention to adapt to various environments and energy conditions, effectively converting various external energy sources such as wind energy, water energy, and mechanical energy into electrical energy, thereby achieving diversified energy utilization.
3. The power generation device of the invention cleverly integrates the forces of gravity and centrifugal force generated by rotation. The synergy of these two forces greatly enhances the rotation of the pendulum, thereby driving the rotor of the generator to achieve a continuous and stable current output. This invention can significantly improve power generation efficiency. Moreover, due to its unique energy conversion mechanism, the device is capable of stable operation under various environmental conditions, demonstrating excellent environmental adaptability and energy utilization efficiency.

### Brief Description of the drawing

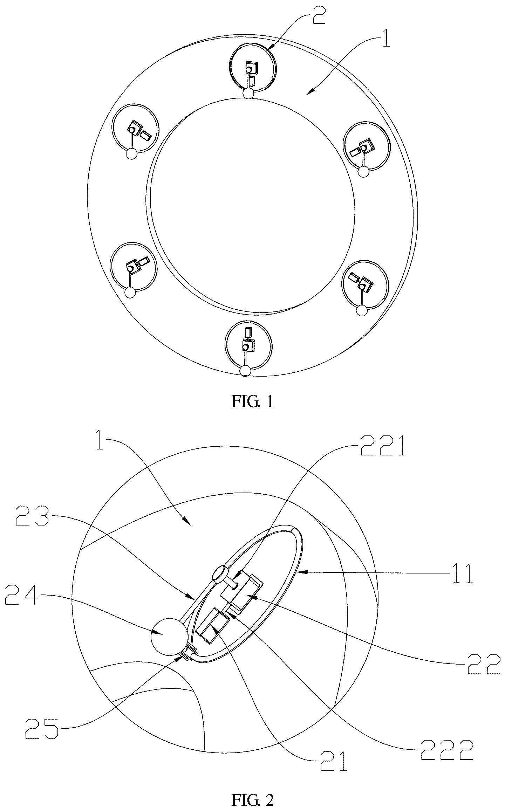

FIG. 1 is a schematic diagram of the structure of a rotary power generation device in embodiment 1.
FIG. 2 is a schematic diagram of the structure of the power generation assembly of the rotary power generation device in embodiment 1.

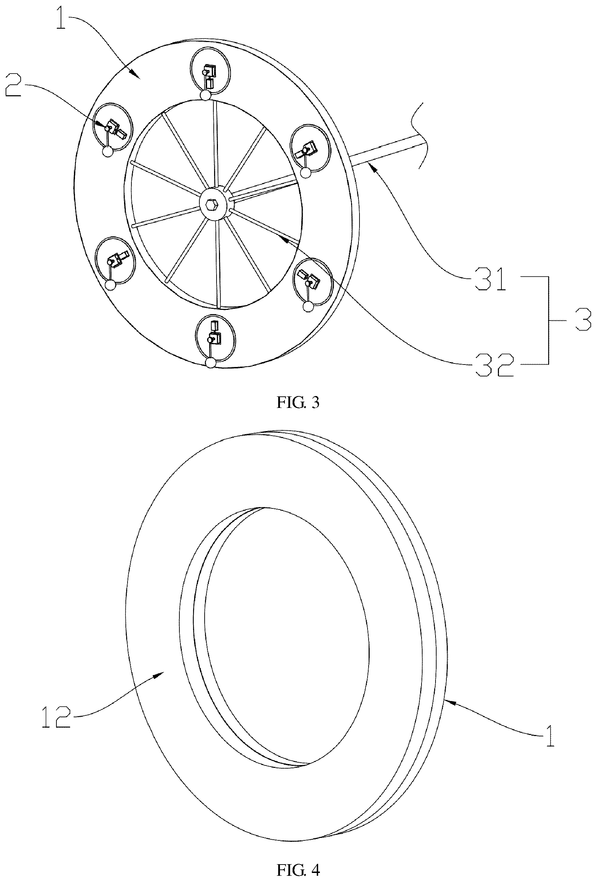

FIG. 3 is a schematic diagram of the structure of the power assembly of the rotary power generation device in embodiment 1.
FIG. 4 is a schematic diagram of the structure of the protective cover of the rotary power generation device in embodiment 1.
FIG. 5 is a schematic diagram of the structure of a rotary power generation device in embodiment 2.
FIG. 6 is a schematic diagram of another implementation of the rotary power generation device in embodiment 2.

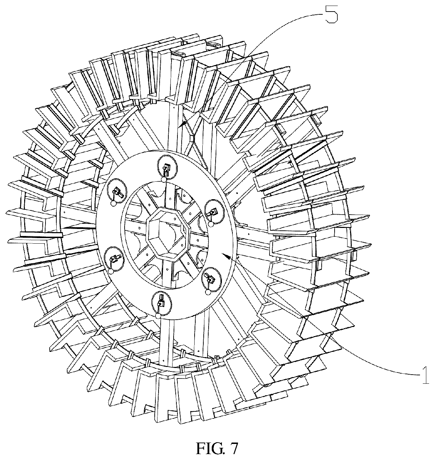

FIG. 7 is a schematic diagram of the structure of a rotary power generation device in embodiment 3.

As shown in the figures:
1 rotating platform, 11 guide rail, 12 protective cover, 2 power generation assembly, 21 generator, 22 gearbox, 221 input shaft, 222 output shaft, 23 swing rod, 24 pendulum, 25 pulley, 3 power assembly, 31 central shaft, 32 spoke, 4 fan blade, 5 water wheel.

### Description of Embodiments

In order to make the objects, technical schemes and advantages of the embodiments of the invention clearer, the technical schemes in the embodiments of the invention will be clearly and completely described below in combination with the accompanying drawings in the embodiments of the invention, obviously, the described embodiments are some, but not all embodiments of the invention. The components of the embodiments of the invention generally described and illustrated in the drawings herein may be arranged and designed in a variety of different configurations.

Embodiment 1:
this embodiment provides a rotary power generation device, comprising a rotating platform 1 and power generation assemblies 2. The rotating platform 1 is arranged longitudinally and rotates in the vertical direction. The power generation assemblies 2 are arranged on the rotating platform 1.

Each power generation assembly 2 comprises a generator 21, a gearbox 22, a swing rod 23, and a pendulum 24. The rotating platform 1 is provided with guide rails 11. Each pendulum 24 is provided with a pulley 25 that matches the corresponding guide rail 11. The pendulum 24 is connected to an input shaft 221 of the gearbox 22 through the swing rod 23; an output shaft 222 of the gearbox 22 is connected to a rotor shaft of the generator 21. The input shaft 221 and the output shaft 222 of the gearbox 22 are arranged at a right angle.

After the rotating platform 1 rotates, the pendulum 24 swings along the guide rail 11 under the action of gravity and the centrifugal force generated by the rotation, and drives a rotor of the generator 21 to rotate through the swing rod 23 and the gearbox 22 to generate electricity. Each gearbox 22 adopts a two-way transmission gearbox; no matter whether the swing rod 23 drives the input shaft 221 to rotate forward or reverse, it can drive the output shaft 222 to rotate in one direction, and drive the rotor of the generator 21 to rotate and generate electricity. The two-way transmission gearbox is prior art, such as CN202790350U, and will not be further described herein.

The rotating platform 1 in this embodiment is a ring-shaped hub structure. The number of the power generation assemblies 2 is six; the power generation assemblies 2 are evenly distributed on the rotating platform 1. The rotating platform 1 is provided with a power assembly 3; the power assembly 3 comprises a central shaft 31 and spokes 32. After an external power component drives the rotating platform 1 to rotate through the central shaft 31; the rotating platform 1 drives each power generation assembly 2 to rotate. During the rotation, each pendulum 24 is influenced by its position and swings or rotates along the corresponding guide rail 11 under the action of gravity and centrifugal force, thereby driving the generator 21 to generate electricity through the swing rod 23 and the gearbox 22.

The power generation device in this embodiment is also provided with a rectifier component; the current generated by the generator 21 is processed by the rectifier component and then transmitted to the power storage device for storage.

In this embodiment, the guide rail 11 can be configured according to the rotational speed of the rotating platform 1. When the rotational speed of the rotating platform 1 is high, the generated centrifugal force is greater, the guide rail 11 is required to be set up in an annular shape. When the rotational speed is low, the guide rail 11 can be configured as an arc-shaped structure covering only the lower half.

In this embodiment, a protective cover 12 is also arranged on the rotating platform 1, the protective cover 12 can accommodate the power generation assemblies 2 to provide protection and dustproof effect.

Embodiment 2:
this embodiment provides a rotary power generation device.

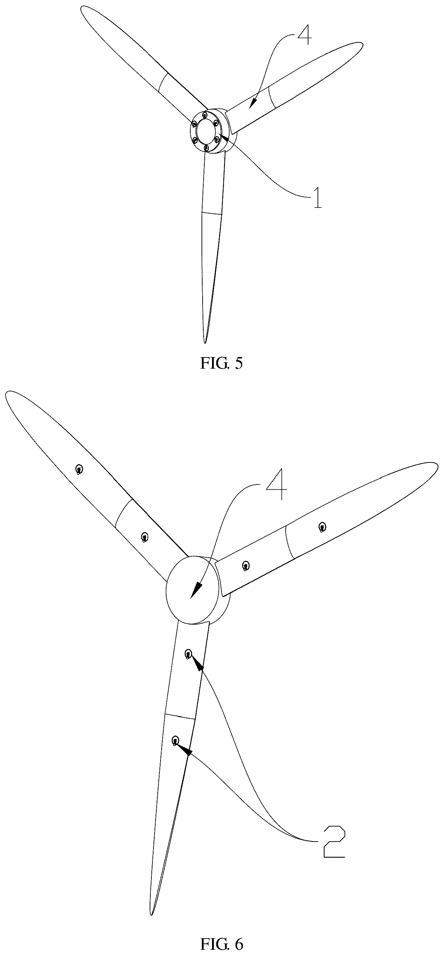

As shown in FIG. 5, the power assembly 3 in this embodiment can be fan blades 4; a rear portion of the rotating platform 1 is fixedly connected to the fan blades 4 via bolts.

As shown in FIG. 6, another implementation of this embodiment is to directly fix the power generation assemblies 2 on the fan blades 4, increase the rotation radius of the power generation assemblies 2 to increase the centrifugal force, further improving the power generation efficiency.

The other structures of this embodiment are the same as those of Embodiment 1.

Embodiment 3:
this embodiment provides a rotary power generation device.

The power assembly 3 in this embodiment can be a water wheel 5; a rear of the rotating platform 1 is fixedly connected to the water wheel 5.

The other structures of this embodiment are the same as those of Embodiment 1.

The above description is only preferred specific embodiments of the invention, but the protection scope of the invention is not limited thereto. Any technician familiar with the technical field can make equivalent replacements or changes according to the technical scheme and inventive concept of the invention within the technical scope disclosed by the invention, which should be covered by the protection scope of the invention.

## Claims

1. A rotary power generation device, comprising a rotating platform and power generation assemblies, wherein multiple power generation assemblies are provided and evenly arranged on the rotating platform;
each power generation assembly comprises a generator, a gearbox, a swing rod, and a pendulum; the pendulum is connected to an input shaft of the gearbox at a right angle through the swing rod; an output shaft of the gearbox is connected to a rotor shaft of the generator;
after the rotating platform rotates, the pendulum swings under the action of gravity and the centrifugal force generated by the rotation of the rotating platform, and drives a rotor of the generator to rotate through the swing rod and the gearbox to generate electricity.

2. The rotary power generation device according to claim 1, wherein the rotating platform is provided with guide rails, each pendulum is provided with a pulley that matches the corresponding guide rail.

3. The rotary power generation device according to claim 2, wherein each guide rail adopts an annular or arc-shaped structure.

4. The rotary power generation device according to claim 1, wherein each gearbox adopts a two-way transmission gearbox.

5. The rotary power generation device according to claim 1, wherein the rotating platform is in a ring shape, a hub shape, a sector shape or a disc shape.

6. The rotary power generation device according to claim 5, wherein the rotating platform is provided with a power assembly, the power assembly drives the rotating platform to rotate.

7. The rotary power generation device according to claim 6, wherein the power assembly is a central shaft, the central shaft is connected to the rotating platform through a support rod;
the central shaft is connected to an external power device.

8. The rotary power generation device according to claim 6, wherein the power assembly can be fan blades;
a rear of the rotating platform is fixedly connected to the power assembly.

9. The rotary power generation device according to claim 6, wherein the power assembly can be a water wheel;
a rear of the rotating platform is fixedly connected to the power assembly.

10. The rotary power generation device according to claim 1, wherein the power generation device is also provided with a rectifier component;
the current generated by the generator is processed by the rectifier component and then transmitted or stored.
